# EUROPÄISCHE PATENTSCHRIFT

(11) **EP 0 890 227 B1**
(45) Veröffentlichungstag und Bekanntmachung des Hinweises auf die Patenterteilung: **08.03.2000**
(21) Anmeldenummer: 96945977.5
(22) Anmeldetag: 07.11.1996
(51) Int. Cl.: H04B 7/26, H04L 27/26

(54) **PUNKT-ZU-MEHRPUNKT FUNKÜBERTRAGUNGSSYSTEM**
POINT-MULTIPOINT RADIO TRANSMISSION SYSTEM
SYSTEME DE RADIOTRANSMISSION POINT-MULTIPOINT

(30) Priorität: 27.03.1996 DE 19612107; 02.09.1996 DE 19635533
(43) Veröffentlichungstag der Anmeldung: 13.01.1999
(73) Patentinhaber: ROBERT BOSCH GMBH, 70442 Stuttgart (DE)
(72) Erfinder: ALBERTY, Thomas, D-71522 Backnang (DE); AUER, Erich, D-74354 Besigheim (DE)
(86) Internationale Anmeldenummer: DE9602119
(87) Internationale Veröffentlichungsnummer: WO9736384

(56) Entgegenhaltungen:
- EP-A- 0 719 062
- WO-A-85/03180
- WO-A-95/34149
- DE-A- 3 621 737
- DE-C- 4 426 183
- US-A- 5 208 804
- US-A- 5 479 447

## Beschreibung

### Stand der Technik

Die vorliegende Erfindung betrifft ein Punkt-zu-Mehrpunkt Funkübertragungssystem, bestehend aus einer Zentralstation und mehreren Teilnehmerstationen, wobei die Übertragungskanäle zwischen der Zentralstation und den Teilnehmerstationen bedarfsweise zuteilbar sind.

Funkübertragungssysteme, seien es terrestrische Richtfunksysteme oder Satellitenübertragungssysteme, erlauben es, neue Funkverbindungen sehr schnell zu installieren oder bestehende zu ergänzen. Bei solchen Funkübertragungssystemen soll einerseits das zur Verfügung stehende Frequenzspektrum möglichst optimal ausgenutzt werden, andererseits soll die Funkübertragung gegenüber störenden Einflüssen (wetterbedingtes Fading frequenzselektives Fading, Interferenzen durch Reflexionen, Interferenzen durch benachbarte Funkzellen, Interferenzen durch andere Funkdienste, Amplituden- und Phasenverzerrunqen) möglichst resistent sein.

Die Forderung nach optimaler Frequenzspektrums-Nutzung läßt sich mit Punkt-zu-Mehrpunkt Funkübertragungssystemen (Richtfunk, Satellitenfunk) verwirklichen. Ein Punkt-zu-Mehrpunkt Richtfunksystem ist im Mikrowellen-Magazin Vol. 10, No. 6, 1984, S 629, 630 dargelegt. Danach läßt sich die Ausnutzung des Frequenzbandes des zur Verfügung stehenden Funkkanals durch eine nur bedarfsweise Belegung des erforderlichen Frequenzbandes verbessern. Die Kommunikation zwischen der Zentralstation und den einzelnen Teilnehmerstationen kann entweder durch Vielfachzugriff im Frequenzmultiplex (FDMA), im Zeitmultiplex (TDMA), im Codemultiplex (CDMA), im Raummultiplex (SDMA) oder in Mischformen dieser Zugriffsverfahren erfolgen, wobei die Frequenzkanäle, die Zeitschlitze, die Spreizcodes und die räumlichen Antennenkeulen je nach Bedarf der Teilnehmer zugeteilt werden können.

Bei einem Punkt-zu-Mehrpunkt Richtfunksystem gemäß der deutschen Anmeldung DE 44 26 183 A1 wird die Übertragungskapazität dadurch flexibel an den Bedarf der Teilnehmer angepaßt, daß die Bandbreite der einzelnen Übertragungskanäle auf die von den einzelnen Teilnehmern jeweils geforderte Datenübertragungsrate eingestellt wird. Auch ist eine veränderbare Einstellung der Modulationsart und des Modulationsgrades (z.B. N-PSK, mit N = 2 .. 16 oder M-QAM mit M = 4 .. 256) auf den einzelnen Übertragungskanälen vorgesehen.

Kanalkodierung stellt ein erstes Hilfsmittel zur Verbesserung der Störresistenz dar. Eine weitere Erhöhung der Störresistenz kann durch Spektrumsspreizung und/oder Frequenzhopping sowie durch orthogonale Mehrträger-Übertragung nach einem festen, vorgegebenen Schema erreicht werden.

Aus der älteren europäischen Anmeldung EP 0 719 062 A2 ist ein Punkt-zu-Mehrpunkt Funkübertragungssystem bekannt, bei dem eine variable Bandbreitenzuteilung (bandwidth on demand) zwischen einer Zentralstation und den einzelnen Teilnehmern vorgesehen ist. Die Signalübertragung beruht hier auf einer Kombination von Codemultiplex (CDMA) und Zeitmultiplex (TDMA). Über den Betrieb von Sende- und Empfangseinrichtungen der Teilnehmer und der Zentralstation bei einer Änderung der Bandbreitenzuteilung offenbart das Dokument nichts.

Ein aus der WO-A-95/034149 bekanntes Punkt-zu-Mehrpunkt Signalübertragungssystem enthält keine Maßnahmen, die eine flexible Anpassung von Übertraungskapazitäten auf zugeschaltete Teilnehmer unterbrechungs- und störungsfrei ermöglichen.

Der Erfindung liegt nun die Aufgabe zugrunde, ein Punkt-zu-Mehrpunkt Funkübertragungssystem der eingangs genannten Art anzugeben, das einerseits sowohl eine flexible Zuweisung und Anpassung von Übertragungskapazitäten auf die zugeschalteten Teilnehmerstationen unterbrechungs- und störungsfrei ermöglicht, als auch andererseits die Funkübertragung gegenüber störenden Einflüssen (wetterbedingtes Fading, frequenzselektives Fading, Interferenzen durch Reflexionen, Interferenzen durch benachbarte Flunkzellen, Interferenzen durch andere Funkdienste, Amplituden- und Phasenverzerrungen) möglichst resistent macht.

### Vorteile der Erfindung

Die gestellte Aufgabe wird mit den Merkmalen des Patentanspruchs 1 dadurch gelöst, daß eine Steuereinrichtung vorhanden ist, welche nur bei Bedarf nach einer höheren Störresistenz in einem Übertragungskanal in den zugehörigen Mehrträger-Modems, mit denen sowohl die Zentralstation als auch jede Teilnehmerstation ausgestattet ist, zunächst bei einer Übertragung der digitalen Daten in einem einzigen Träger ein oder mehrere Übertragungsparameter so einstellt, daß bei bestmöglicher Nutzung der Bandbreite, der Funkkanal möglichst störresistent gemacht wird. Dabei weist jedes Mehrtäger-Modem mindestens zwei Sende- und mindestens zwei Empfangskanäle auf, wobei die Signalübertragung im Modem zunächst nur über einen Sende- beziehungsweise Empfangskanal erfolgt. Bei Änderung der Übertragungskanäle besorgt die Steuereinrichtung in dem mindestens einen nicht in Betrieb befindlichen Sende- beziehungsweise Empfangskanal die Einstellung der neuen Übertragungsparameter, während die Signalübertragung in den anderen Sende- beziehungsweise Empfangskanälen fortgesetzt wird, und nach abgeschlossener Akquisition des Funkkanals mit den neuen Übertragungsparametern erfolgt eine Umschaltung auf den zuvor nicht in Betrieb befindlichen Sende- beziehungsweise Empfangskanal. Reicht, wiederum nur im Bedarfsfall, die Störresistenz bei Übertragung mit einem einzigen Träger nicht aus, wird die gestellte Aufgabe mit den Merkmalen des Patentanspruchs 1 dadurch gelöst, daß eine vorhandene Steuereinheit den Übergang von einer Einträger- auf eine Mehrträgerübertragung dergestalt auslöst, daß in den vorhandenen Mehrträger-Modems der Zentral- und der Teilnehmerstation der zu übertragende Datenstrom, falls dieser nicht bereits aus einer Mehrzahl einzelner Datenströme besteht (z.B. N x 2 Mbit/s oder M x 1,5 Mbit/s), in einzelne Datenströme demultiplext und diese in einzelnen Trägern überträgt, wobei die Übertragungsparameter der einzelnen Träger durch die Steuereinheit auf die erforderliche Störresistenz hin optimiert weden. Die Anzahl der Träger für eine Mehrträgerübertragung ist durch die in den Modems der Zentral- und der Teilnehmerstation implementierte Zahl beschränkt und kann bei Bedarf entsprechend angepaßt werden.

Der Übergang von einer Einträger- auf eine Mehrträgerübertragung kann mit den Merkmalen des Patentanspruchs 1 ohne Unterbrechung oder Störung der Übertragung dadurch erfolgen, daß die Mehrträger-Modems der Zentral- und der Teilnehmerstation mehr als zwei Sende- und Empfangskanäle aufweisen, wobei zur Änderung der Übertragungskanäle, ausgelöst durch die Steuereinrichtung, sowohl im Falle der Einträger- als auch im Falle der Mehrträgerübertragung mindestens ein Sende- beziehungsweise Empfangskanal zur Einstellung von neuen Übertragungsparametern für einen der restlichen Sende- und Empfangskanäle stets zur Verfügung steht, während die Signalübertragung in den restlichen Sende- beziehungsweise Empfangskanälen fortgesetzt wird. Hierbei erfolgt erst nach abgeschlossener Akquisition des Funkkanals mit den neuen Übertragungsparametern eine Umschaltung auf den mindestens einen, zuvor nicht in Betrieb befindlichen Sendebeziehungsweise Empfangskanal.

Mit den genannten Maßnahmen kann bei einem Punkt-zu-Mehrpunkt Funkübertragungssystem der zur Verfügung stehende Funkkanal sehr flexibel an die erforderlichen Übertragungskanäle der einzelnen Teilnehmer angepaßt werden, ohne daß Funkverbindungen unterbrochen werden müssen oder gestört werden. Es können alle Übertragungsparameter sämtlicher Sende- und Empfangskanäle im Falle einer Einträgertübertragung, im Falle einer Mehrträgerübertragung, im Falle eines Überganges von einer Einträger- zu einer Mehrträgerübertragung, im Falle eines Überganges von einer Mehrträger- zu einer Einträgerübertragung sowie im Falle einer Änderung der Anzahl der Träger bei einer Mehrträgerübertragung mit dem Ziel sowohl einer effizienten Nutzung des Funkkanals als auch des Erreichens einer erforderlichen Störresistenz durch eine Steuereinrichtung gesteuert werden.

Zweckmäßige Weiterbildungen der Erfindung gehen aus den Unteransprüchen hervor.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Blockschaltbild eines Punkt-zu-Mehrpunkt Funkübertragungssystem,
Figuren 2 und 3 Blockschaltbilder von Modems verschiedener Ausführungen,
Figuren 4, 5, 6 und 7 Blockschaltbilder von Modems mit verschiedenartig gemultiplexten Sende- beziehungsweise Empfangskanälen.

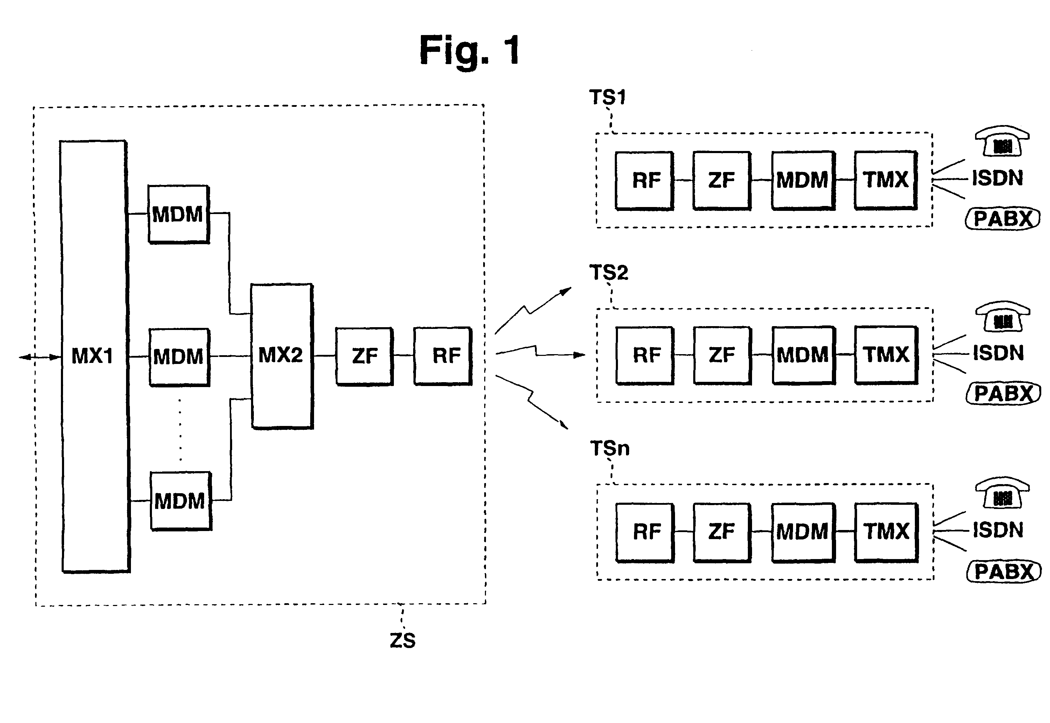

Das in Figur 1 prinzipiell dargestellte Punkt-zu-Mehrpunkt Funkübertragungssystem besteht aus einer Zentralstation ZS und mehreren Teilnehmerstationen TS1, TS2 ... TSn. Die Zentralstation ZS weist so viele parallel geschaltete Modems MDM auf, wie maximal Teilnehmerstationen TS1, TS2 ... TSn eine Funkverbindung mit der Zentralstation ZS aufnehmen können. Alle Modems MDM der Zentralstation ZS sind an beiden Ausgängen über Multiplexer/Demultiplexer MX1 und MX2 zusammengeschaltet. Der erste Multiplexer/Demultiplexer MX1 stellt die Verbindung zu anderen Nachrichtennetzen her. An den zweiten Multiplexer/Demultiplexer MX2 ist ein Schaltblock ZF angeschlossen, der die Umsetzung der auszusendenden oder empfangenen Signale in eine Zwischenfrequenzebene vornimmt. Daran schließt sich eine Sende/Empfangseinheit (Frontend) RF an

Einen ähnlichen Aufbau weisen die einzelnen Teilnehmerstationen TS1, TS2... TSn auf. An eine Sende/Empfangseinheit RF schließt sich eine Zwischenfrequenzschaltung ZF an, die wiederum mit sinem Modem MDM verbunden ist. Ein Terminal-Multiplexer/Demultiplexer TMX stellt die Verbindung zwischen dem Modem MDM und Endstelleneinrichtungen (z. B. Telefon) oder öffentlichen oder privaten Nachrichtennetzen (z. B. ISDN, PABX) her.

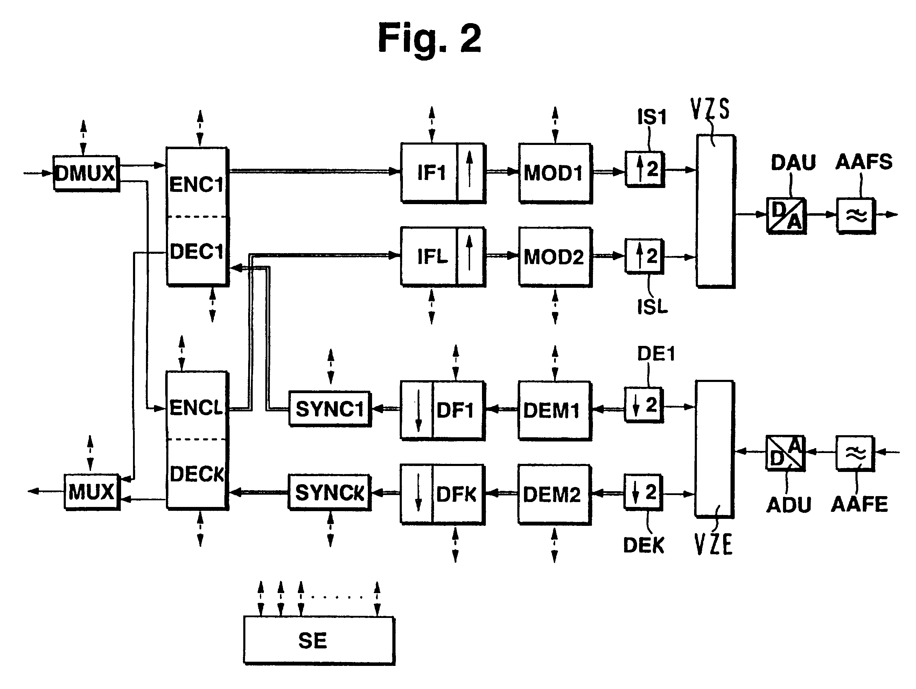

Die Figur 2 zeigt ein Beispiel für den Aufbau eines Modems MDM, wie es in gleicher Weise in der Zentralstation ZS und in den einzelnen Teilnehmerstationen TS1, TS2... TSn eingesetzt ist. Das Modem besitzt L Sende- und K Empfangskanäle, wobei L≥2 und K≥2 vorausgesetzt wird.

In Senderichtung schaltet ein Demultiplexer DMUX ein auszusendendes Datensignal an einen der L Encoder ENC1 bis ENCL durch. Jeder der L Encoder ENC1 bis ENCL gehört zu einem der L Sendekanäle. Die doppellinig gezeichneten Verbindungsleitungen deuten an, daß hier die digitalen Datensignale komplex sind, also einen Real- und einen Imaginärteil besitzen. Auf jeden der L Encoder ENC1 bis ENCL folgt jeweils ein variables Interpolationsfilter IF1 bis IFL (Kanalfilter). Daran schließt sich in jedem Signalpfad ein Modulator MODI bis MODL an, von denen jeder auf die Frequenz seines zugehörigen Sendekanals abgestimmt ist. An den Ausgängen der Modulatoren MOD1 bis MODL sind Interpolatoren IS1 bis ISL mit festem Interpolationsfaktor 2 (z.B. gemäß DE 36 21 737 C2) angeschlossen, welche die komplexen digitalen Ausgangssignale der Modulatoren MODI bis MODL in reelle digitale Datensignale umsetzen. Über eine Verzweigung VZS gelangt das reelle digitale Datensignal eines jeden Sendekanals zu einem für alle gemeinsamen Digital/Analog-Umsetzer DAU, der das digitale Datensignal in ein analoges Datensignal wandelt. Das analoge Datensignal wird anschließend über ein Antialiasing Filter AAFS geführt.

In entgegengesetzter Richtung - in Empfangsrichtung - gelangt ein empfangenes analoges Datensignal über ein Antialiasing Filter AAFE an einen Analog/Dlgital-Umsetzer ADU. Das daraus hervorgehende reelle digitale Datensignal wird über eine Verzweigung VZE allen Empfangs-Signalpfaden zugeführt, von denen jeder einem der K Empfangskanäle zugeordnet ist. Jeder Empfangs-Signalpfad 1 bis K besitzt einen Dezimator DE1 bis DEK mit festem Dezimationsfaktor 2 (z.B. gemäß DE 36 21 737 C2), der das reelle digitale Ausgangssignal des Analog/Digital-Umsetzers in ein komplexes digitales Datensignal umformt. Auf den Dezimator DE1 bis DEK eines jeden Empfangs-Signalpfades 1 bis K folgt ein Demodulator DEM1 bis DEMK für das komplexe digitale Datensignal. Die Demodulatoren sind auf die Frequenz ihres zugehörigen Empfangskanals abgestimmt. Dem Demodulator DEM1 bis DEMK ist in jedem Signalpfad ein Dezimationsfilter DF1 bis DFK (Matched Filter) nachgeschaltet.

Die Dezimationsfilter DF1 bis DFK, wie auch die Interpolationsfilter IF1 bis IFL erfüllen die Wurzel-Nyquist- Bedingung. Der Aufbau und die Funktionsweise solcher variabler Dezimations- und Interpolationsfilter sind in den "Proceedings Second European Conference on Satellite Communications", Liege/Belgien, Oktober 1991, ESA P-332, Seite 457-464 beschrieben.

In den K Empfangs-Signalpfaden befinden sich Synchronisierschaltungen SYNC1 bis SYNCK, wie sie ebenfalls aus den zitierten "Proceedings Second European Conference on Satellite Communications" bekannt sind. Sie synchronisieren die Schaltungen im jeweiligen Signalpfad auf die Trägerfrequenz, die Trägerphase und den Abtasttakt des empfangenen Datensignals. Damit ist das Modem unabhängig von Synchronisationssignalen, die ansonsten zusammen mit den Empfangssignalen übertragen werden müßten.

Am Ende eines jeden Empfangs-Signalpfades 1 bis K befindet sind ein Decoder DEC1 bis DECK. Sowohl die Codierung in den Sende-Signalpfaden 1 bis L als auch die Decodierung in den Empfangs-Signalpfaden 1 bis K geschieht vorzugsweise mit Viterbi-Codern/Decodern. Die Ausgänge der Decoder DEC1 bis DECK führen zu einem Multiplexer MUX.

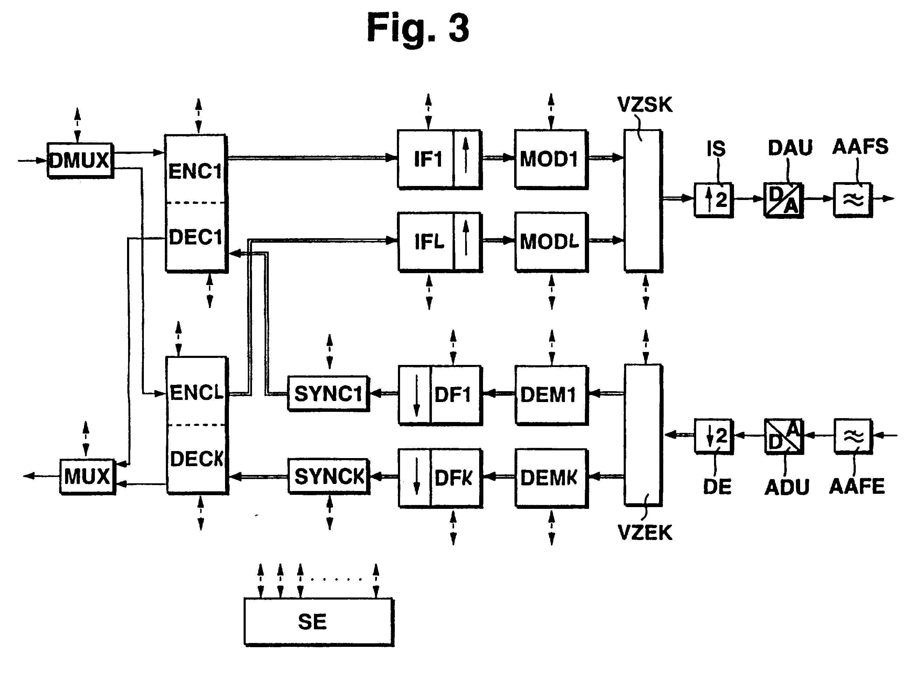

Statt für jeden Sende-Signalpfad 1 bis L einen eigenen Interpolator IS1 bis ISL, beziehungsweise für jeden Empfangs-Signalpfad 1 bis K einen eigenen Dezimator DE1 bis DEK vorzusehen, wie in Figur 2 dargestellt, kann auch gemäß dem in Figur 3 gezeigten Ausführungsbeispiel für die L Sende-Signalpfade und für die K Empfangs-Signalpfade jeweils ein Interpolator IS beziehungsweise Dezimator DE eingesetzt werden. Die Verzweigung VZSK vor dem Interpolator IS und die Verzweigung VZEK hinter dem Dezimator DE müssen dann komplexe, digitale Signale aufteilen beziehungsweise zusammenfassen.

Sowohl die Verzweigungen VZS, VZE für reelle, digitale Signale (Figur 2) als auch die Verzweigungen VZSK, VZEK für komplexe, digitale Signale (Figur 3) können als Frequenzmultiplexer (VZS, VZSK in Senderichtung) beziehungsweise Frequenzdemultiplexer (VZE1 VZEK in Empfangsrichtung) ausgeführt sein.

Die Interpolatoren IS, IS1 bis ISL und die Dezimatoren DE, DE1 bis DEK können als komplexe Halbbandfilter realisiert sein (vgl. EP 0 250 926 B1).

Die komplexen Trägerschwingungen für die komplexen, digitalen Modulatoren MOD1 bis MODL und Demodulatoren DEM1 bis DEMK werden zweckmäßigerweise mit der Methode der direkten, digitalen Synthese (DDS) (vergleiche "An Analysis of the Output Spectrum of Direct Digital Frequency Synthesizers in the Presence of Phase-Accumulator Truncation", IEEE 1987, 41st. Annual Frequency Control Symposium, Seite 495 ff.)erzeugt.

Das Punkt-zu-Mehrpunkt Funkübertragungssystem soll, wie eingangs angegeben, eine sehr flexible Zuteilung von Übertragungskanälen zwischen der Zentralstation und Teilnehmerstationen ermöglichen, wobei der zur Vefügung stehende Funkkanal optimal ausgenutzt wird. Verändert sich die Zahl der benötigten Übertragungskanäle weil ein oder mehrere Teilnehmerstationen einen Datenaustausch mit der Zentralstation neu aufnehmen oder die Datenübertragung abbrechen, so werden von einer in der Zentralstation ZS vorhandenen Steuereinrichtung SE aus die Übertragungsparameter in den von der Änderung der Übertragungskanäle betroffenen Modems in der Zentralstation und in Teilnehmerstationen so verändert, daß die Übertragungskanäle den Funkkanal effizient belegen. Zu den veränderbaren Übertragungsparametern gehören zunächst für jeden einzelnen Träger beispielsweise die Datenrate, Modulationsart oder Modulationsgrad (Z.B. N-PSK, mit N = 2 ... 16 oder M-QAM mit M = 4 ... 256), die Codierung, die Kanalfrequenz oder auch der Sendepegel und Parameter zur Signalqualitätsbeurteilung, um eine vorgegebene Datenübertragungsqualität (z.B. Bitfehlerrate ≤ 10⁻⁷)sicherzustellen und Funkfeldeinflüsse (Fadings, Reflexionen) zu minimieren. Darüber hinaus gehören zu den veränderbaren Übertragungsparametern auch die Anzahl der Träger, die zur Übertragung eingesetzt werden, was Einträger- und Mehrträgerübertragung einschließt, dergestalt, daß jeder einzelne Täger bei Mehrträgerübertragung individuell in sämtlichen oben aufgeführten Übertragungsparametern gesteuert werden kann. Diese Merkmale werden im folgenden unter dem Begriff Dynamisches Orthogonales Frequenz Division Multiplex (DOFDM) zusammengefaßt.

Die Steuereinrichtung SE berechnet also bei einer Änderung der Zahl der erforderlichen Übertragungskanäle oder bei Änderung der erforderlichen Störresistenz die Übertragungsparameter nach den genannten Gesichtspunkten der effizienten Ausnutzung der gesamten Bandbreite des Funkkanals und einer erforderlichen Störresistenz für die Übertragung. Diese veränderten Übertragungsparameter gibt die Steuereinrichtung SE als Steuersignale (als strichlierte Doppelpfeil-Linien in den Figuren angedeutet) an die betreffenden Schaltblöcke in den Modems ab. Die Steuersignale für die Modems in den Teilnehmnerstationen werden beispielsweise über einen Signalisierungskanal übertragen, der entweder an einen oder mehrere Nutzsignalkanäle angehängt ist oder als eigener Broadcastkanal ausgestrahlt wird.

Von den Übertragungsparametern legt die Zahl I (mit der Nebenbedingung: 1 ≤ l ≤ L-1) zunächst die aktuelle Anzahl der zu aktivierenden Sendeträger und die Zahl k (mit der Nebenbedingung: 1 ≤ k ≤ K-1 ) die aktuelle Anzahl der zu aktivierenden Empfangsträger fest.

Die Datenrate aller Sendeträger 1 bis L wird in den variablen Interpolationsfiltern IF1 bis IFL und die aller Empfangsträger 1 bis K in den Dezimationsfiltern DF1 bis DFK eingestellt. Änderungen der Trägerfrequenz der Sendeträger 1 bis L werden in den Modulatoren MOD1 bis MODL und die der Empfangsträger 1 bis K in den Demodulatoren DEM1 bis DEMK vorgenommen. Eine Änderung der Modulation und Codierung erfolgt für die Sendeträger 1 bis L in den Encodern ENC1 bis ENCL und für die Empfangsträger 1 bis K in den Decodern DEC1 bis DECK.

Wie oben beschrieben, gibt es in jedem Modem L Sende- und K Empfangskanäle. Die Anzahl l der aktivierten Sendekanäle darf maximal die Zahl L-1 erreichen, so daß zur Änderung der Übertragungsparameter wenigstens noch ein nicht aktiver Sendekanal zur Verfügung steht. Ebenso darf die Anzahl k der aktivierten Empfangskanäle maximal die Zahl K-1 erreichen, so daß zur Änderung der Übertragungsparameter wenigstens noch ein nicht aktiver Empfangskanal zur Verfügung steht.

Wenn die Steuereinrichtung SE entweder eine Anforderung für eine Änderung der Übertragungskanäle erhält oder sie die Notwendigkeit nach einer Erhöhung der Störresistenz ermittelt hat und sie daraufhin die Übertragungsparameter dementsprechend neu berechnet, gibt sie ihre neuen Übertragungsparameter als Steuersignale an die betreffenden Schaltblöcke eines nicht aktiven Sende- und/oder Empfangskanals ab. Sobald die neuen Übertragungsparameter in den betreffenden Sende- und/oder Empfangskanälen der Modems der Zentralstation sowie der zugehörigen Teilnehmetstation eingestellt worden sind, wird eine Bestätigung der efolgreichen Akquisition aller neu aktivierten Sende- und/oder Empfangskanäle über den Signalisierungspfad bei der Steuereinrichtung SE abgewartet, bevor die Signalübertragung auf die neu aktivierten Sende- und/oder Empfangskanäle verlagert wird und die durch diese ersetzten Sende- und/oder Empfangskanäle deaktiviert werden. Dadurch werden störende Unterbrechungen bei der Signalübertragung vemieden.

Die Auswahl der Sende- und/oder Empfangskanäle in den betroffenen Modems der Zentral- und Teilnehmerstationen trifft die Steuereinheit SE aufgrund der Statusinformationen welche der Kanäle aktiv und welche inaktiv sind.

In den vorangehend beschriebenen Ausführungsbeispielen ist jedem Sende- beziehungsweise Empfangskanal ein eigener Signalpfad zugeordnet. Das heißt, für die Sende- und für die Empfangsrichtung sind ein großer Teil der Schaltungsblöcke L-fach bzw. K-fach vorhanden. Dieser Aufwand an Schaltungen kann dadurch verringert werden, daß Teile sowohl für die L Sende-Signalpfade als auch für die K Empfangs-Sianalpfade im Zeitmultiplex betrieben werden.

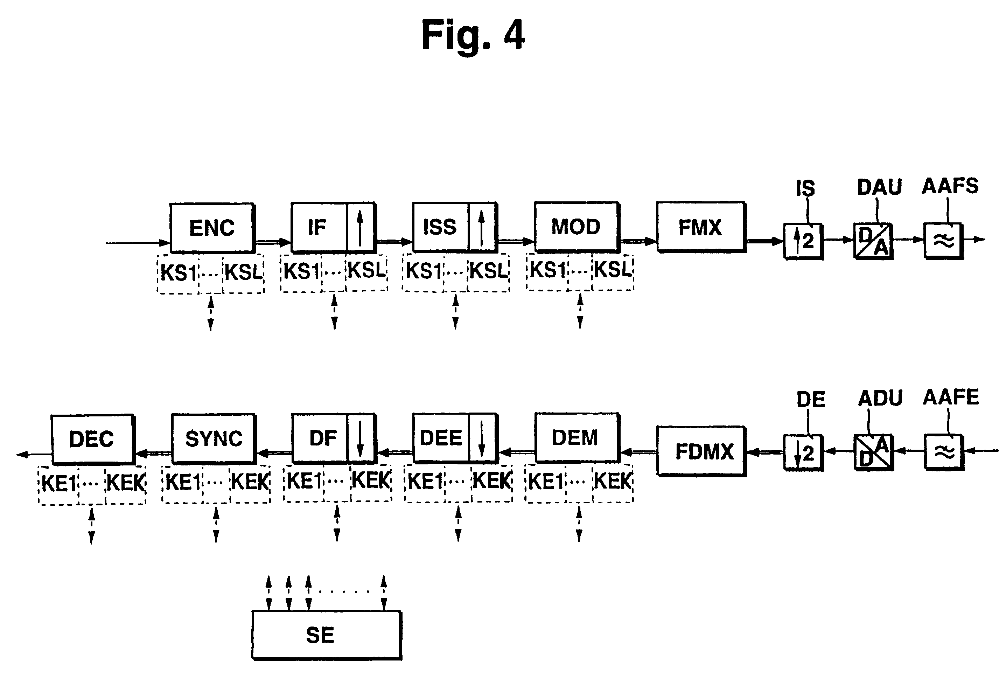

In der Figur 4 ist ein Signalpfad für die L Sendekanäle und ein Signalpfad für die K Empfangskanäle dargestellt. Der Sende-Signalpfad besitzt für die L Sendekanäle einen Encoder ENC, ein variables Interpolationsfilter IF und einen Modulator MOD. Außerdem kann zwischen dem variablen Interpolationsfilter IF und dem Modulator MOD noch ein weiterer Interpolator ISS mit einem festen Interpolationsfaktor eingefügt werden, wie der Figur 4 zu entnehmen ist. Wegen dieses zusätzlichen Interpolators ISS braucht das variable Interpolationsfilter IF nur einen geringeren Interpolationsfaktor zu haben. Auf die Funktion der einzelnen Schaltblöcke ENC, IF, ISS, MOD und der sich an den Frequenzmultiplexer FMX anschließenden Schaltblöcke (Interpolator IS, Digital/Analog-Umsetzer DAU, Antialiasing-Filter AAFS) wird hier nicht näher eingegangen, weil sie im Zusammenhang mit den in den Figuren 2 und 3 dargestellten Ausführungsbeispielen schon näher beschrieben worden sind. Dasselbe gilt für die einzelnen Schaltblöcke des in Figur 4 dargestellten Empfangs-Signalpfades. Ebenso ist dieser ein Empfangs-Signalpfad, in dem alle Schaltblöcke nur einfach vorkommen, für die Übertragung der K Empfangskanäle vorgesehen. Der optional zwischen dem Demodulator DEM und dem variablen Dezimationsfilter DF eingesetzte Dezimator DEE mit festem Dezimationsfaktor ermöglicht es, für das variable Dezimationsfilter DF einen geringeren Dezimationsfaktor vorzusehen.

Die an den einzelnen Schaltungseinheiten angefügten strichlierten Blöcke sollen verdeutlichen, daß die L Sendekanäle KS1 bis KSL im Zeitmultiplex über die eine Sende-Signalpfad-Verarbeitung und die K Empfangskanäle KE1 bis KEK im Zeitmultiplex über die eine Empfangs-Signalpfad-Verarbeitung verarbeitet werden können.

Die L Sendekanäle werden nach dem Modulator MOD von einem Frequenzmultiplexer FMX zu einem Sendesignal zusammengefaßt, und die Zerlegung eines Empfangssignals in die K Empfangskanäle erfolgt durch einen vor dem Demodulator DEM angeordneten Frequenzdemultiplexer FDMX.

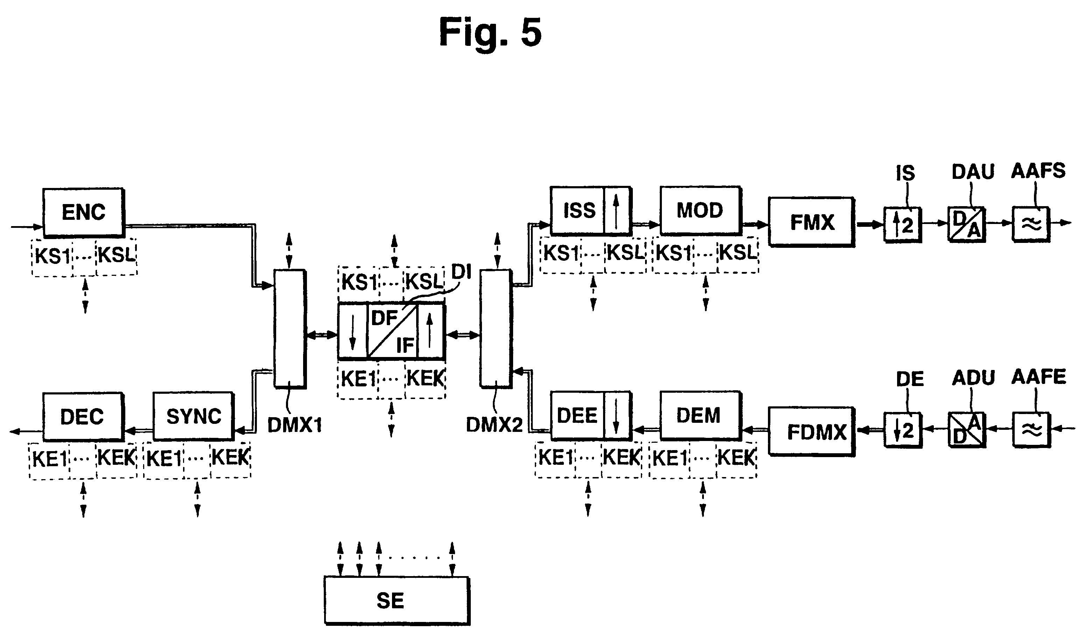

Eine weitere Konzentration der Schaltungseinheiten kann dadurch erfolgen, daß, wie in Figur 5 dargestellt, bezüglich der variablen Dezimation und der variablen Interpolation die L Sendekanäle und die K Empfangskanäle über eine einzige Einheit gemultiplext werden. Dazu ist eine Funktionseinheit DI vorgesehen, die sowohl ein variables Dezimationsfilter DF als auch ein variables Interpolationsfilter IF enthält.

Multiplexer/Demultiplexer DMX1 und DMX2 an beiden Toren der Funktionseinheit Dl bewirken, daß sowohl die L Sendekanäle als auch die K Empfangskanäle im Zeitmultiplex über die Funktionseinheit Dl verarbeitet werden können. Alle anderen Schalteinheiten, welche dieselben Bezugszeichen wie in Figur 4 aufweisen, haben auch dieselbe Funktion wie bei dem dort dargestellten Ausführungsbeispiel eines Modems.

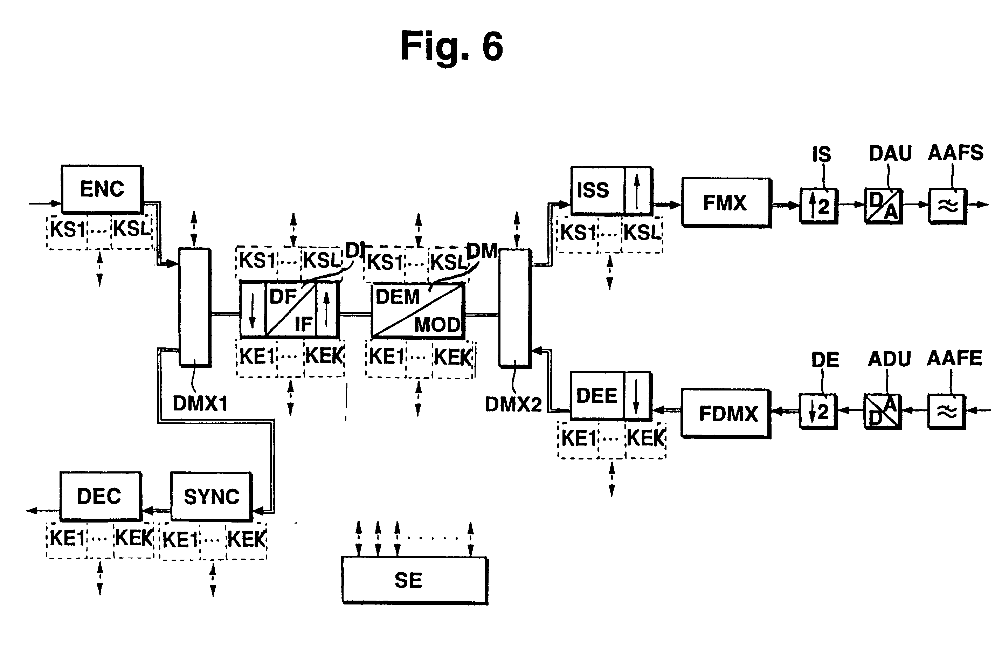

Bei dem in Figur 6 dargestellten Modem sind auch der Demodulator DEM und der Modulator MOD in einer gemeinsamen Funktionseinheit DM zusammengefaßt, welche sowohl die L Sende- als auch die K Empfangskanäle im Zeitmultiplex verarbeitet. Diese Schaltungsvariante des Modems bringt nochmals eine Reduzierung des Schaltungsaufwandes.

Allerdings müssen der Interpolator ISS und der Dezimator DEE komplexe Koeffizienten aufweisen.

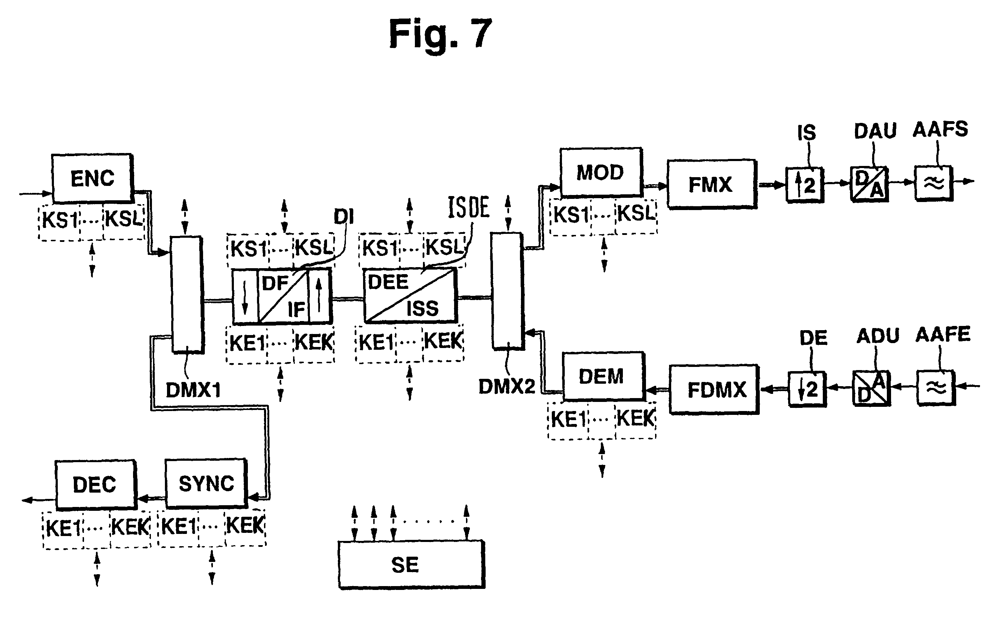

Die Figur 7 zeigt gegenüber der in Figur 6 dargestellten Ausführungsform eine noch aufwandsgünstigere Schaltung. Durch die Vertauschung der Reihenfolge von Modulator MOD und Interpolator ISS und der Vertauschung von Demodulator DEM und Dezimator DEE lassen sich der Interpolator ISS und der Dezimator DEE mit reellen Koeffizienten realisieren; beide sind in einer gemeinsamen Funktionseinheit ISDE zusammengefaßt. Die Vorteile der Zeitmultiplexverarbeitung der Sende- und Empfangs-Signalpfade bleiben erhalten.

Anstelle der Umschaltung auf noch nicht aktive Sende- und Empfangskanäle kann in jedem einzelnen Sendebeziehungsweise Empfangskanal der Modems auch eine kontinuierliche Veränderung der Übertragungsparameter vorgenommen werden. Die Übertragung kann ebenso kurzzeitig unterbrochen werden, so daß in diesem Unterbrechungszeitraum die Übertragungsparameter verändert werden können. In dem Unterbrechungszeitraum werden die empfangenen oder auszusendenden Daten zwischengespeichert, damit sie nicht verlorengehen.

## Patentansprüche

1. Punkt-zu-Mehrpunkt Funkübertragungssystem, bestehend aus einer Zentralstation (ZS) und mehreren Teilnehmerstationen (TS1, TS2, ..., TSn), wobei die Übertragungskanäle zwischen der Zentralstation (ZS) und den Teilnehmerstationen (TS1, TS2, ..., TSn) bedarfsweise zuteilbar sind, dadurch gekennzeichnet,
- daß die Zentralstation (ZS) für jeden der maximal zur Verfügung stehenden Übertragungskanäle ein Modem (MDM) aufweist und ebenfalls jede Teilnehmerstation (TS1, TS2 ... TSn) mit einem Modem (MDM} ausgestattet ist
- daß jedes Modem (MDM) L Sendekanäle, wobei L größer oder gleich zwei ist, und K Empfangskanäle aufweist, wobei K größer oder gleich zwei ist,und die Signalübertragung im Modem über maximal L-1 der Sende- beziehungsweise über maximal K-1 der Empfangskanäle erfolgt,
- daß eine Steuereinrichtung (SE) vorhanden ist, welche bei einer Veränderung der Übertragungskanäle und/oder bei einer Änderung der erforderlichen Störresistenz der Übertragungskanäle in jedem betroffenen Modem (MDM) die Anzahl 1, wobei 1 ≤ l ≤ L-1, der aktiven Sendekanäle und/oder die Anzahl k, wobei 1 ≤ k ≤ K-1, der aktiven Empfangskanäle, sowie einen oder mehrere der Übertragungsparameter - Kanalträgerfrequenz, Datenrate, Modulation, Codierung, Sendepegel, Parameter zur Signalqualitätsbeurteilung - in einem oder mehreren der l aktiven Sendekanäle und/oder der k aktiven Empfangskanäle so einstellt, daß sowohl die Bandbreite des zur Verfügung stehenden Funkkanals optimal ausgenutzt wird als auch die erforderliche Störresistenz im Übertragungskanal erreicht wird,
- daß bei Änderung der Übertragungsparameter die Steuereinrichtung (SE) in dem mindestens einen nicht in Betrieb befindlichen Sende- beziehungsweise Empfangskanal die Einstellung der neuen Übertragungsparameter vornimmt, während die Signalübertragung in den maximal L-1 anderen Sende- beziehungsweise maximal K-1 Empfangskanälen fortgesetzt wird, und erst nach abgeschlossener Akquisition der neuen Übertragungskanäle eine Umschaltung auf den oder die zuvor nicht in Betrieb befindlichen Sende- beziehungsweise Empfangskanal oder -kanäle erfolgt.

2. Punkt-zu-Mehrpunkt Funkübertragungssystem nach Anspruch 1, dadurch gekennzeichnet, daß für jeden der L Sendekanäle ein Encoder (ENC1 bis ENCL) und ein Modulator (MOD1 bis MODL) vorhanden sind, und daß zwischen dem Encoder (ENC1 bis ENCL) und dem Modulator (MOD1 bis MODL) jeweils ein variables Interpolationsfilter (IF1 bis IFL) vorgesehen ist.

3. Punkt-zu-Mehrpunkt Funkübertragungssystem nach Anspruch 2, dadurch gekennzeichnet, daß jedem Modulator (MOD1 bis MODL) jeweils ein Interpolator (IS1 bis ISL) nachgeschaltet ist, welcher das komplexe digitale Ausgangssignal des jeweiligen Modulators (MOD1 bis MODL) in ein reelles digitales Signal umwandelt.

4. Punkt-zu-Mehrpunkt Funkübertragungssystem nach Anspruch 2, dadurch gekennzeichnet, daß die Ausgangssignale der L Modulatoren (MOD1 bis MODL) der L Sendekanäle über eine Verzweigung (VZSK) einem Interpolator (IS) zugeführt sind, welcher das komplexe digitale Ausgangssignal des jeweiligen Modulators (MOD1 bis MODL) in ein reelles digitales Signal umwandelt.

5. Punkt-zu-Mehrpunkt Funkübertragungssystem nach Anspruch 1, dadurch gekennzeichnet, daß für die L Sendekanäle ein Encoder (ENC), ein Modulator (MOD) und ein zwischen beiden eingefügtes variables Interpolationsfilter (IF) vorgesehen sind und daß der Encoder (ENC), der Modulator (MOD) und das variable Interpolationsfilter (IF) alle L Sendekanäle im Zeitmultiplex verarbeiten.

6. Punkt-zu-Mehrpunkt Funkübertragungssystem nach Anspruch 5, dadurch gekennzeichnet, daß ein Multiplexer (FMX) das komplexe digitale Ausgangssignal des Modulators (MOD) einem Interpolator (IS) zuführt, welcher das komplexe digitale Ausgangssignal in ein reelles digitales Signal umwandelt.

7. Punkt-zu-Mehrpunkt Funkübertragungssystem nach Anspruch 1, dadurch gekennzeichnet, daß für jeden der K Empfangskanäle ein Demodulator (DEM1 bis DEMK) und ein Decoder (DEC1 bis DECK) vorgesehen sind, und daß zwischen dem Demodulator (DEM1 bis DEMK) und dem Decoder (DEC1 bis DECK) jeweils ein variables Dezimationsfilter (DF1 bis DFK) geschaltet ist.

8. Punkt-zu-Mehrpunkt Funkübertragungssystem nach Anspruch 7, dadurch gekennzeichnet, daß jedem Demodulator (DEM1 bis DEMK) jeweils ein Dezimator (DE1 bis DEK) vorgeschaltet ist, welcher ein reelles digitales Empfangssignal in ein komplexes digitales Signal umwandelt.

9. Punkt-zu-Mehrpunkt Funkübertragungssystem nach Anspruch 7, dadurch gekennzeichnet, daß für die K Empfangskanäle ein Dezimator (DE) vorgesehen ist, welcher ein reelles digitales Empfangssignal in ein komplexes digitales Signal umwandelt, das den Demodulatoren (DEM1 bis DEMK) der K Empfangssignalkanäle über eine Verzweigung (VZEK) zugeführt wird.

10. Punkt-zu-Mehrpunkt Funkübertragungssystem nach Anspruch 1, dadurch gekennzeichnet, daß für die K Empfangskanäle ein Demodulator (DEM), ein Decoder (DEC) und ein zwischen beiden eingefügtes variables Dezimationsfilter (DF) vorgesehen sind und daß alle K Empfangskanäle im Zeitmultiplex über den Demodulator (DEM), das Dezimationsfilter (DF) und den Decoder (DEC) verarbeitet werden.

11. Punkt-zu-Mehrpunkt Funkübertragungssystem nach Anspruch 10, dadurch gekennzeichnet, daß ein Dezimator (DE) ein reelles digitales Empfangssignal in ein komplexes digitales Empfangssignal umwandelt und daß ein Demultiplexer (FDMX) vorgesehen ist, der das komplexe digitale Empfangssignal dem Demodulator (DEM) zuführt.

12. Punkt-zu-Mehrpunkt Funkübertragungssystem nach einem der Ansprüche 3, 4, 6, 8, 9, 10, dadurch gekennzeichnet, daß der Interpolator (IS1 bis ISL, IS) beziehungsweise der Dezimator (DE1 bis DEK, DE) als komplexes Halbbandfilter ausgeführt ist.

13. Punkt-zu-Mehrpunkt Funkübertragungssystem nach Anspruch 4 oder 9, dadurch gekennzeichnet, daß die Verzweigung (VZS, VZSK) des Sende-Signalkanales als Frequenzmultiplexer ausgeführt ist und daß die Verzweigung (VZE, VZEK) des Empfangs-Signalkanales als Frequenzdemultiplexer ausgeführt ist.

14. Punkt-zu-Mehrpunkt Funkübertragungssystem nach Anspruch 5 oder 10, dadurch gekennzeichnet, daß mit Hilfe von Multiplexer/Demultiplexer (DMX1, DMX2) sowohl die L Sendekanäle als auch die K Empfangskanäle im Zeitmultiplex über eine gemeinsame Funktionseinheit (Dl) mit einem variablen Dezimations- und einem variablen Interpolationsfilter verarbeitet werden.

15. Punkt-zu-Mehrpunkt Funkübertragungssystem nach Anspruch 5 oder 10, dadurch gekennzeichnet, daß mit Hilfe von Multiplexer/Demultiplexer (DMX1, DMX2) sowohl die L Sendekanäle als auch die K Empfangskanäle im Zeitmultiplex über eine erste Funktionseinheit (DI) mit einem variablen Dezimations- und einem variablen Interpolationsfilter und über eine zweite Funktionseinheit (DM) mit einem Modulator und Demodultor verarbeitet werden.

16. Punkt-zu-Mehrpunkt Funkübertragungssystem nach Anspruch 5 oder 10, dadurch gekennzeichnet, daß mit Hilfe von Multiplexer/Demultiplexer (DMX1, DMX2) sowohl die L Sendekanäle als auch die K Empfangskanäle im Zeitmultiplex über eine erste Funktionseinheit (DI) mit einem variablen Dezimations- und einem variablen Interpolationsfilter und über eine zweite Funktionseinheit (ISDE) mit einem Interpolator und einem Dezimator mit festem Interpolationsfaktor bzw. Dezimationsfaktor verarbeitet werden.

## Claims

1. Point-to-multipoint radio transmission system, comprising a central station (ZS) and a plurality of subscriber stations (TS1, TS2, ..., TSn), in which case the transmission channels between the central station (ZS) and the subscriber stations (TS1, TS2, ..., TSn) can be assigned as required, characterized
- in that the central station (ZS) for each of the maximum number of available transmission channels has a modem (MDM), and each subscriber station (TS1, TS2, ... TSn) is likewise equipped with a modem (MDM),
- in that each modem (MDM) has L transmission channels, where L is greater than or equal to two, and K receiving channels 1, where K is greater than or equal to two, and the signal transmission in the modem is carried out via a maximum of L-1 transmission channels and a maximum of K-1 receiving channels,
- in that a control device (SE) is present which, whenever a change occurs in the transmission channels and/or whenever a change occurs in the required interference resistance in the transmission channels, sets, in each affected modem (MDM), the number 1 (where 1 ≤ l ≤ L-1) of active transmission channels and/or the number k (where l ≤ k ≤ K-1) of active receiving channels, as well as one or more of the following transmission parameters - channel carrier frequency, data rate, modulation, coding, transmission level, parameters for signal quality assessment - in one or more of the 1 active transmission channels and/or of the k active receiving channels, such that not only is the bandwidth of the available radio channel optimally utilized, but the required interference resistance in the transmission channel is also achieved,
- in that, whenever the transmission parameters change, the control device (SE) sets the new transmission parameters in the at least one transmission channel or receiving channel which is not in operation,- while the signal transmission is continued in the maximum of L-1 other transmission channels and the maximum of K-1 receiving channels, and a changeover to the transmission channel or receiving channel or channels which is or were previously not in operation is carried out only after acquisition of the new transmission channels has been completed.

2. Point-to-multipoint radiotransmission system according to Claim 1, characterized in that an encoder (ENC1 to ENCL) and a modulator (MOD1 to MODL) are provided for each of the L transmission channels, and in that a variable interpolation filter (IF1 to IFL) is in each case provided between the encoder (ENC1 to ENCL) and the modulator (MOD1 to MODL).

3. Point-to-multipoint radiotransmission system according to Claim 2, characterized in that an interpolator (IS1 to ISL) is connected downstream of each modulator (MOD1 to MODL), and converts the complex digital output signal from the respective modulator (MOD1 to MODL) into a real digital signal.

4. Point-to-multipoint radiotransmission system according to Claim 2, characterized in that the output signals from the L modulators (MOD1 to MODL) of the L transmission channels are supplied via a branch point (VZSK) to an interpolator (IS) which converts the complex digital output signal from the respective modulator (MOD1 to MODL) into a real digital signal.

5. Point-to-multipoint radiotransmission system according to Claim 1, characterized in that an encoder (ENC), a modulator (MOD) and a variable interpolation filter (IF), which is inserted between the two, are provided for the L transmission channels, and in that the encoder (ENC), the modulator (MOD) and the variable interpolation filter (IF) use a time-division multiplex method to process all L transmission channels.

6. Point-to-multipoint radiotransmission system according to Claim 5, characterized in that a multiplexer (FMX) supplies the complex digital output signal from the modulator (MOD) to an interpolator (IS) which converts the complex digital output signal into a real digital signal.

7. Point-to-multipoint radiotransmission system according to Claim 1, characterized in that a demodulator (DEM1 to DEMK) and a decoder (DEC1 to DECK) are provided for each of the K receiving channels, and in that a variable decimation filter (DF1 to DFK) is in each case connected between the demodulator (DEM1 to DEMK) and the decoder (DEC1 to DECK).

8. Point-to-multipoint radiotransmission system according to Claim 7, characterized in that a respective decimator (DE1 to DEK) is connected upstream of each demodulator (DEM1 to DEMK), and converts a real digital received signal into a complex digital signal.

9. Point-to-multipoint radiotransmission system according to Claim 7, characterized in that a decimator (DE) is provided for the K receiving channels and converts a real digital received signal into a complex digital signal, which is supplied to the demodulators (DEM1 to DEMK) of the K received signal channels via a branch point (VZEK).

10. Point-to-multipoint radiotransmission system according to Claim 1, characterized in that a demodulator (DEM), a decoder (DEC) and a variable decimation filter (DF), which is inserted between the two, are provided for the K receiving channels, and in that all K receiving channels are processed using the time-division multiplex method, via the demodulator (DEM), the decimation filter (DF) and the decoder (DEC).

11. Point-to-multipoint radiotransmission system according to Claim 10, characterized in that a decimator (DE) converts a real digital received signal into a complex digital received signal, and in that a demultiplexer (FDMX) is provided, which supplies the complex digital received signal to the demodulator (DEM).

12. Point-to-multipoint radiotransmission system according to one of Claims 3, 4, 6, 8, 9, 10, characterized in that the interpolator (IS1 to ISL, IS) and/or the decimator (DE1 to DEK, DE) are in the form of a complex half-band filter.

13. Point-to-multipoint radiotransmission system according to Claim 4 or 9, characterized in that the branch point (VZS, VZSK) in the transmission signal channel is in the form of a frequency multiplexer, and in that the branch point (VZE, VZEK) in the received signal channel is in the form of a frequency demultiplexer.

14. Point-to-multipoint radiotransmission system according to Claim 5 or 10, characterized in that the multiplexer/demultiplexer (DMX1, DMX2) are used to process both the L transmission channels as well as the K receiving channels using the time-division multiplex method, via a common functional unit (DI) having a variable decimation filter and a variable interpolation filter.

15. Point-to-multipoint radiotransmission system according to Claim 5 or 10, characterized in that the multiplexer/demultiplexer (DMX1, DMX2) are used to process both the L transmission channels as well as the K receiving channels using the time-division multiplex method via a first functional unit (DI) having a variable decimation filter and a variable interpolation filter, and via a second functional unit (DM) having a modulator and demodulator.

16. Point-to-multipoint radiotransmission system according to Claim 5 or 10, characterized in that the multiplexer/demultiplexer (DMX1, DMX2) is used to process both the L transmission channels and the K receiving channels using the time-division multiplex method, via a first functional unit (DI) having a variable decimation filter and a variable interpolation filter, and via a second functional unit (ISDE) having an interpolator and a decimator, which respectively have a fixed interpolation factor and decimation factor.

## Revendications

1. Système de radiotransmission point-multipoint formé d'une station centrale (ZS) et de plusieurs stations participantes (TS1, TS2 ... TSn), les canaux de transmission étant répartis entre la station centrale (ZS) et les stations participantes (TS1, TS2 .... TSn) à la demande, caractérisé en ce que
- la station centrale (ZS) comporte pour chacun du maximum des canaux de transmission disponibles, un modem (MDM) et chaque station participante (TS1, TS2 ... TSn) est équipée également d'un modem (MDM),
- pour chaque modem (MDM), on a L canaux d'émission, L étant égal ou supérieur à 2 et K canaux de réception, K étant supérieur ou égal à 2 et la transmission de signal dans le modem se fait au maximum par (L-1) canaux d'émission ou au maximum par (K-1) canaux de réception,
- une unité de commande (SE) qui, en cas de changement des canaux de transmission et/ou pour un changement de la résistance nécessaire à la perturbation des canaux de transmission, règle dans chaque modem concerné (MDM), le nombre (1) (1 ≤ l ≤ L - 1) des canaux d'émission actifs et/ou le nombre (k) (1 ≤ k ≤ K - 1) des canaux de réception actifs, ainsi qu'un ou plusieurs paramètres de transmission (fréquences de porteuses de canal, débit de données, modulation, codage, niveau d'émission, paramètres pour apprécier la qualité du signal) dans un ou plusieurs des (1) canaux d'émission actifs et/ou (k) des canaux de réception actifs pour à la fois utiliser de façon optimale la largeur de bande du canal radio disponible et obtenir la résistance nécessaire aux perturbations dans le canal de transmission,
- et en cas de changement des paramètres de transmission, l'installation de commande (SE) effectue dans au moins un canal d'émission ou de réception hors service, le réglage des nouveaux paramètres de transmission alors que la transmission du signal se poursuit dans le maximum (L-1) des autres canaux d'émission ou dans le maximum (K-1) des autres canaux de réception et seulement à la fin de l'acquisition des nouveaux canaux de transmission, il y a commutation sur le ou les canaux d'émission ou de réception qui étaient précédemment au repos.

2. Système de radiotransmission point-multipoint selon la revendication 1,
caractérisé
par un codeur (ENC1-ENCL) et un modulateur (MOD1-MODL) pour chacun des L canaux d'émission et entre le codeur (ENC1-ENCL) et le modulateur (MOD1-MODL) il y a chaque fois un filtre d'interpolation variable (IF1-IFL).

3. Système de radiotransmission point-multipoint selon la revendication 2,
caractérisé en ce que
chaque modulateur (MOD1-MODL) est suivi d'un interpolateur (IS1-ISL) qui convertit le signal de sortie numérique complexe du modulateur (MOD1-MODL) respectif en un signal numérique réel.

4. Système de radiotransmission point-multipoint selon la revendication 2,
caractérisé en ce que
les signaux de sortie des L modulateurs (MOD1-MODL) des L canaux d'émission sont appliqués à un interpolateur (IS) par une dérivation (VZSK) qui convertit le signal de sortie numérique complexe du modulateur respectif (MOD1-MODL) en un signal numérique réel.

5. Système de radiotransmission point-multipoint selon la revendication 1,
caractérisé par
un codeur (ENC), un modulateur (MOD) et entre eux un filtre d'interpolation variable (IF) est prévu dans les L canaux d'émission et le codeur (ENC), le modulateur (MOD) et le filtre à interpolation variable (IF) traitent tous les L canaux d'émission en multiplexage dans le temps.

6. Système de radiotransmission point-multipoint selon la revendication 5,
caractérisé en ce qu'
un multiplexeur (FMX) transmet le signal de sortie numérique complexe du modulateur (MOD) à un interpolateur (IS) qui convertit le signal de sortie numérique complexe en un signal numérique réel.

7. Système de radiotransmission point-multipoint selon la revendication 1,
caractérisé
par un démodulateur (DEM1-DEMK) et un décodeur (DEC1-DECK) pour chacun des K canaux de réception et par un filtre à décimation variable (DF1-DFK) respectif entre le démodulateur (DEM1-DEMK) et le décodeur (DEC1-DECK).

8. Système de radiotransmission point-multipoint selon la revendication 7,
caractérisé
par un décimateur (DE1-DEK) monté en amont de chaque démodulateur (DEM1-DEMK) pour convertir un signal de réception numérique réel et un signal numérique complexe.

9. Système de radiotransmission point-multipoint selon la revendication 7,
caractérisé
par un décimateur (DE) pour les K canaux de réception, ce décimateur convertissant un signal de réception numérique réel en un signal numérique complexe fourni aux démodulateurs (DEM1-DEMK) des K canaux de réception par l'intermédiaire d'une dérivation (VZEK).

10. Système de radiotransmission point-multipoint selon la revendication 1,
caractérisé
par un démodulateur (DEM), un décodeur (DEC) et entre ceux-ci, un filtre à décimation variable (DF) pour les K canaux de réception et tous les K canaux de réception sont traités en multiplexage dans le temps par le démodulateur (DEM), le filtre à décimation (DF) et le décodeur (DEC).

11. Système de radiotransmission point-multipoint selon la revendication 10,
caractérisé en ce qu'
un décimateur (DE) convertit un signal de réception numérique réel en un signal de réception numérique complexe et il est prévu un démultiplexeur (FDMX) qui applique le signal de réception numérique complexe au démodulateur (DEM).

12. Système de radiotransmission point-multipoint selon l'une des revendications 3, 4, 6, 8, 9, 10,
caractérisé en ce que
l'interpolateur (IS1 à ISL, IS) ou le décimateur (DE1 à DEK, DE) est un filtre à demi-bande complexe.

13. Système de radiotransmission point-multipoint selon l'une des revendications 4 ou 9,
caractérisé en ce que
la dérivation (VZS, VZSK) du canal du signal d'émission est réalisée comme un multiplexeur de fréquences et la dérivation (VZE, VZEK) du canal du signal de réception est réalisée par un démultiplexeur de fréquences.

14. Système de radiotransmission point-multipoint selon la revendication 5 ou 10,
caractérisé par
des multiplexeurs/démultiplexeurs (DMX1, DMX2), qui traitent à la fois les L canaux d'émission et les K canaux de réception en multiplexage dans le temps par une unité fonctionnelle commune (D1) avec un filtre à décimation variable et un filtre à interpolation variable.

15. Système de radiotransmission point-multipoint selon la revendication 5 ou 10,
caractérisé par
des multiplexeurs/démultiplexeurs (DMX1, DMX2), qui traitent à la fois L canaux d'émission et K canaux de réception en multiplexage dans le temps par une première unité fonctionnelle (DI) avec un filtre à décimation variable et un filtre à interpolation variable et par une seconde unité fonctionnelle (DM) comprenant un modulateur et un démodulateur.

16. Système de radiotransmission point-multipoint selon l'une des revendications 5 ou 10,
caractérisé par
des multiplexeurs/démultiplexeurs (DMX1, DMX2), qui traitent à la fois les L canaux d'émission et les K canaux de réception en multiplexage dans le temps par une première unité fonctionnelle (DI) avec un filtre à décimation variable et un filtre à interpolation variable et par une seconde unité fonctionnelle (ISDE) avec un interpolateur et un décimateur ayant un coefficient d'interpolation ou un coefficient de décimation fixe.
